Europäisches Patentamt

European Patent Office

Office européen des brevets

(11) Veröffentlichungsnummer: **0 359 855 B1**

## (12) EUROPÄISCHE PATENTSCHRIFT

(45) Veröffentlichungstag der Patentschrift: **19.11.92**

(21) Anmeldenummer: **88115495.9**

(22) Anmeldetag: **21.09.88**

(51) Int. Cl.⁵: **H02K 23/66**, H02P 7/00, H02K 11/00

(54) **Drehzahlmessvorrichtung für einen Kommutatormotor.**

(43) Veröffentlichungstag der Anmeldung:
**28.03.90 Patentblatt 90/13**

(45) Bekanntmachung des Hinweises auf die
Patenterteilung:
**19.11.92 Patentblatt 92/47**

(84) Benannte Vertragsstaaten:
**DE FR IT**

(56) Entgegenhaltungen:
**EP-A- 0 093 817**
**EP-A- 0 221 304**
**US-A- 1 884 021**

(73) Patentinhaber: **SIEMENS AKTIENGESELL-SCHAFT**
**Wittelsbacherplatz 2**
**W-8000 München 2(DE)**

(72) Erfinder: **Harbauer, Werner, Dipl.-Ing.**
**Feldstrasse 10**
**W-8702 Kürnach(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 359 855 B1

## Beschreibung

Die Erfindung bezieht sich auf eine Drehzahlmeßvorrichtung für einen Kommutatormotor gemäß Oberbegriff des Anspruchs 1; ein derartiger Kommutatormotor ist z.B. durch die EP-A1-0 221 304 bekannt.

Der durch die EP-A1-0 221 304 bekannte Kommutatormotor ist als Pumpenmotor als Antrieb für automatische Bremssysteme in einem Kraftfahrzeug vorgesehen. Sowohl bei derartigen Antrieben als auch bei anderen Kraftfahrzeugantrieben, z.B. für einen wirksamen Einklemmschutz eines elektromotorisch angetriebenen Fensterhebers, ist die genaue jeweils aktuelle Erfassung der Motordrehzahl erforderlich. Es ist bereits vorgeschlagen worden, zu diesem Zweck einen Tachogenerator an einen drehenden Teil, insbesondere an die Motor bzw. Getriebewelle des Antriebes, vorzugsweise als externes Bauteil, anzukoppeln.

Ferner ist zum Schutz eines Kraftfahrzeug-Fensterheberantriebes im Stillstand-Kurzschlußfall des antreibenden Kommutatormotors vorgeschlagen worden (EP-A-0 306 795, welche nur nach Artikel 54(3)(4) zum Stand der Technik zählt), den Kommutatormotor über einen Betätigungsschalter automatisch abzuschalten, der in Schaltabhängigkeit von einer Wechselspannung gestellt ist, die nur bei laufendem Motor mit der Motordrehzahl der Kommutatorlamellenzahl entsprechender Frequenz in einer an sich vorhandenen motorseitigen Funkentstördrossel induziert wird.

Gemäß Aufgabe vorliegender Erfindung soll bei einem Kommutatormotor, insbesondere einem Kraftfahrzeug-Bordmotor auf einfache und betriebssichere Weise die jeweilige Drehzahl erfaßt werden können.

Die Lösung dieser Aufgabe ist bei einem Kommutatormotor der eingangs genannten Art erfindungsgemäß durch die Lehre des Anspruchs 1 möglich; vorteilhafte Ausgestaltungen der Erfindung sind jeweils Gegenstand der Unteransprüche.

Die erfindungsgemäße Drehzahlmeßvorrichtung erlaubt unter weitgehender Benutzung bereits vorhandener Bauteile einen mit geringem Einbauraum in das vorhandene Kommutator-Bürstensystem des Kommutatormotors integrierbare Drehzahlerfassung mit hoher Auflösung entsprechend der Lamellenzahl des Kommutators und einem in der Regel eine Verstärkung des Meßsignals erübrigende und auf einfache Weise auswertbare drehzahlproportionale Größe, wobei die Frequenz des zwischen einer Hauptbürste und der Drehzahlmeßbürste abnehmbaren Spannung dem Produkt aus der Motordrehzahl und der Lamellenzahl entspricht. Eine besonders eindeutige frequenz- bzw. drehzahlproportionale Signalfolge mit einfach erkennbarem Signalwechsel zwischen Null-Spannungmeßsignal einerseits bzw. konstant großem Plus-Spannungsmeßsignal andererseits ist dann gegeben, wenn nach einer Ausgestaltung der Erfindung der Umfangsabstand zwischen einer Hauptbürste und Drehzahlmeßbürste größer als der Umfangsabstand zwischen zwei benachbarten Lamellen jedoch kleiner als die Umfangsbreite einer einzelnen Lamelle ist.

Unterschiedlich große Ausgangsspannungen können auf einfache Weise dadurch erreicht werden, daß die Drehzahlmeßbürste am Kommutatorumfang in kleinerem Umfangswinkel-Abstand zu einer Hauptbürste und damit in größerem Umfangswinkel-Abstand zur anderen Hauptbürste angeordnet und somit zumindest zwei unterschiedlich hohe Spannungen, z.B. in Anpassung an die Empfindlichkeit der nachgeschalteten Drehzahlauswertevorrichtung direkt abgreifbar sind. Zweckmäßigerweise ist der Drehzahlauswertevorrichtung sowohl die Spannung zwischen der Drehzahlmeßbürste und der einen näherliegenden Hauptbürste als auch die Spannung zwischen der Drehzahlmeßbürste und der entfernteren Hauptbürste zuführbar; gegebenenfalls kann auf einfache Weise eine zusätzliche Anpassung der zwischen Hauptbürste und Drehzahlmeßbürste anstehenden Spannung an die Drehzahlauswertevorrichtung durch einen zwischengeschalteten Anpassungswiderstand verbessert werden.

Wird der Kommutatormotor nicht aus einem eigenen Bordnetz, sondern z.B. aus einer Netzspannungsquelle gespeist, so ist es zweckmäßig, die der Drehzahlauswertevorrichtung von den Bürsten zugeführte Signal induktiv oder kapazitiv, d.h. mit Potentialtrennung auszukoppeln.

Zweckmäßigerweise wird zur Minderung der notwendigen Bauteile bzw. des zur Verfügung stehenden Einbauraums eine für die Hauptbürsten an sich schon vorhandene Bürstenhalterung zur Aufnahme der Drehzahlmeßbürste mitbenutzt. Nach einer besonderen Ausgestaltung der Erfindung wird für einen Kommutatormotor mit auf einer Bürstenplatte schwenkbar gelagerten Hammer-Bürstenhaltern für die Hauptbürsten die zusätzliche Drehzahlmeßbürste in den Bürstenrücken eines Hammerbürstenhalters für eine Hauptbürste mitgehaltert. Dies kann z.B. in einfacher Weise durch eine zusätzliche in den aus Kunststoff üblicherweise hergestellten Hammer-Bürstenhalter eingegossene Aufnahmetasche erfolgen. Eine betriebssichere Kontaktierung sowohl der Hauptbürsten als auch der Drehzahlmeßbürste kann mit einfachen Mitteln dadurch erreicht werden, daß unabhängig von der an sich zum Andruck der Hammerbürsten vorhandenen Bürstenandruckfeder die Drehzahlmeßbürste in ihrer Tasche in Andruckrichtung auf den Kommutator führbar gelagert und durch eine eigene Schraubenfeder bzw. Bügelfeder an die Lamellen des Kommutators angedrückt ist.

Die Erfindung sowie weitere vorteilhafte Ausgestaltungen der Erfindung werden im folgenden anhand schematisch dargestellter Ausführungsbeispiele in der Zeichnung näher erläutert; darin zeigen:

FIG 1    in einem radialen Schnitt eines Kommutatormotors die axiale Draufsicht auf eine Bürstentragplatte mit in einem an sich vorhandenen Hammer-Bürstenhalter gehalteter zusätzlicher Drehzahlmeßbürste;

FIG 2    in einem radialen Schnitt durch einen Kommutatormotor die axiale Draufsicht auf eine Bürstenplatte mit auf dieser befestigten zusätzlichen Drehzahlmeßbürste;

FIG 3    das Prinzip Konstruktions- bzw. Schaltungsbild einer erfindungsgemäßen Drehzahlmeßvorrichtung für einen Kommutatormotor,

FIG 4    an einer Teilabwicklung des Kommutators die Relation von Haupt- und Drehzahlmeßbürste zur Lamellenanordnung bei anstehendem Null-Spannungsmeßsignal,

FIG 5    an einer Teilabwicklung des Kommutators die Relation von Haupt- und Drehzahlmeßbürste zur Lamellenanordnung bei anstehendem Plus-Spannungsmeßsignal.

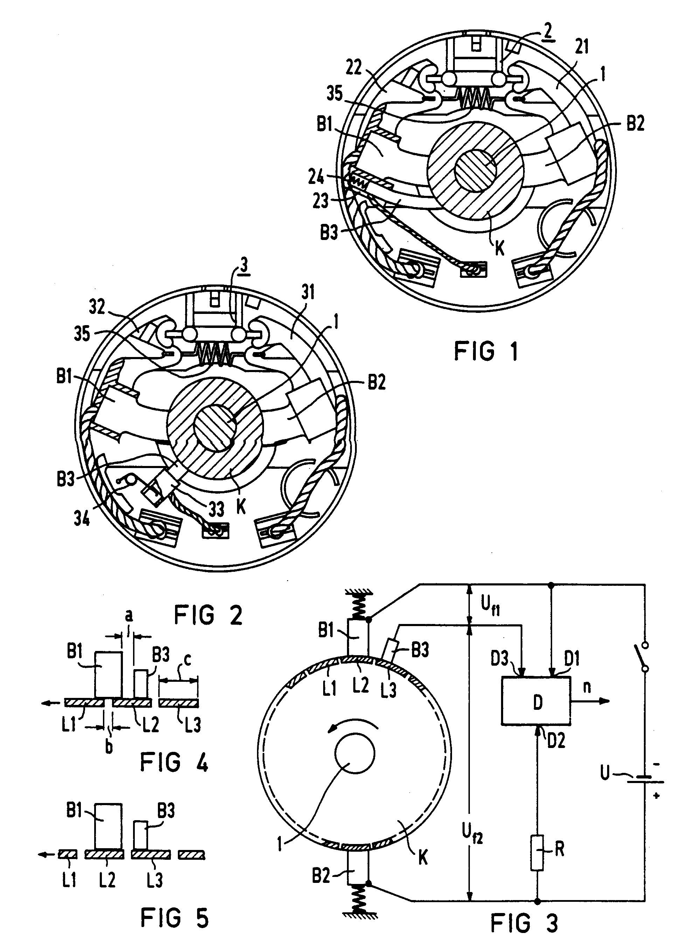

FIG 1 zeigt einen auf der Rotorwelle 1 eines Kommutatormotors befestigten Kommutator K mit über dessen Umfang verteilt angeordneten Lamellen L, die bekannterweise mit der Ankerwicklung des Rotors in Verbindung stehen. Zur Speisung der Ankerwicklung wird der Kommutator K von zwei am Umfang gegenüberliegenden Hauptbürsten B1 bzw.B2 beschliffen, die mit einer äußeren Speisespannungsquelle U verbunden sind.

Zur Erfassung der jeweiligen Drehzahl des Rotors des Kommutatormotors und damit des Kommutators ist eine Drehzahlmeßbürste B3 in engem Abstand zur ersten Hauptbürste B1 und in größerem Abstand zur zweiten Hauptbürste B2 derart angeordnet, daß zwischen der ersten Hauptbürste B1 und der Drehzahlmeßbürste B3 eine der konstanten Lamellenzahl und der veränderlichen Motordrehzahl proportionale Frequenz der Spannung $U_{f1}$ und zwischen der zweiten Hauptbürste B2 und der Drehzahlmeßbürste B3 eine der konstanten Lamellenzahl und der veränderlichen Motordrehzahl proportionale Frequenz der Spannung $U_{f2}$ abgreifbar ist. In vorteilhafter Weise ist gemäß FIG 4,5 der Umfangsabstand a zwischen einer Hauptbürste B1 bzw.B2 und der Drehzahlmeßbürste B3 größer als der Umfangsabstand b zwischen zwei benachbarten Lamellen L1,L2 bzw.L3,L4, jedoch kleiner als die Umfangsbreite c einer einzelnen Lamelle L1 bzw.L2 bzw.L3; bei der gemäß FIG 4 angenommenen Augenblickstellung der Bürsten B1 bzw.B3 sowie der in Pfeilrichtung sich weiterbewegenden, in Abwicklung dargestellten Kommutatorlamellen L1,L2,L3 ergeben sich ein Null-Spannungsmeßsignal und bei der gemäß FIG 5 angenommenen Augenblickstellung ein Plus-Spannungsmeßsignal. Der Wechsel zwischen diesen beiden Meßsignalen (Ein-Aus) entspricht dem Produkt aus Lamellenzahl und Motordrehzahl, so daß die Motordrehzahl auf einfache und eindeutige Weise detektierbar ist.

Die beiden Spannungen $U_{f1}$ bzw. $U_{f2}$ sind an entsprechende Anschlußklemmen D3;D1 bzw.D3;D2 einer Drehzahlauswertevorrichtung D anschließbar, die an ihrem Ausgang die auf einfache Weise aus der am Eingang anstehenden Frequenz detektierbare Größe der Motordrehzahl n abgibt. Zur Anpassung der an die Eingangsklemmen D3,D1 bzw.D3;D2 anstehenden Spannung, insbesondere im Fall der größeren Spannung zwischen der zweiten Hauptbürste B2 und der Drehzahlmeßbürste B3, ist in der Zuleitung zur Drehzahlauswertevorrichtung ein Anpassungswiderstand R vorgesehen.

FIG 1 und FIG 2 zeigen zwei vorteilhafte konstruktive Ausgestaltungen zur aufwandsarmen und kleinbauenden Unterbringung der zusätzlichen Drehzahlmeßbürste B3.

Gemäß FIG 1 ist, ausgehend von einer an sich, z.B. durch die EP-A-0 221 304 bekannten Bürstenhalterung mit an einer Bürstenplatte 2 schwenkbar gelagerten Hammer-Bürstenhaltern 21,22 vorgesehen, in den Hammerrücken des Hammer-Bürstenhalters für die erste Hauptbürste B1 eine Tasche 23 mit einzugießen, in der die Drehzahlmeßbürste B3 in Andruckrichtung geführt, gleitend gelagert und durch eine zusätzliche, für die Drehzahlmeßbürste B3 spezifisch bemessene Andruckfeder 24 unabhängig von der an sich für die Hauptbürsten B1;B2 vorhandene Zugfeder 25 auf den Umfang des Kommutators gedrückt.

FIG 2 zeigt bei ansonsten unveränderter Übernahme der Konstruktion von FIG 1 die Halterung der zusätzlichen Drehzahlmeßbürste in einem an der Bürstenplatte 3 befestigten Bürstenkasten 33 und einer spezifisch für die Drehzahlmeßbürste B3 ausgelegten Blattfeder 34, mit der die in dem Bürstenkasten 33 in Andruckrichtung auf den Kommutator K gleitend geführte Drehzahlmeßbürste B3 gegen den Umfang des Kommutators K andrückbar ist.

**Patentansprüche**

1. Drehzahlmeßvorrichtung für einen Kommutatormotor, insbesondere statorseitig permanenterregten Kraftfahrzeug-Bordmotor, mit einem Kommutator (K), dessen über seinen Umfang verteilte, mit der rotorseitigen Ankerwicklung verbundene Lamellen (L) von zumindest einer ersten und einer zweiten, mit einer äußeren Speisespannungsquelle (U) verbundenen Hauptbürste (B1;B2) beschliffen sind, **gekennzeichnet** durch zumindest eine zusätzliche, am Kommutatorumfang zwischen den Hauptbürsten (B1;B2) die Lamellen (L) beschleifende Drehzahlmeßbürste (B3) und einer Drehzahlauswertevorrichtung (D) mit einem an die Drehzahlmeßbürste (B3) und eine Hauptbürste (B1 bzw.B2) anschließbaren Spannungseingang (D3;D1 bzw.D3;D2).

2. Drehzahlmeßvorrichtung nach Anspruch 1, **dadurch gekennzeichnet**, daß der Umfangsabstand (a) zwischen einer Hauptbürste (B1 bzw.B2) und der Drehzahlmeßbürste (B3) größer als der Umfangsabstand (b) zwischen zwei benachbarten Lamellen (L1;L2 bzw.L3;L4), jedoch kleiner als die Umfangsbreite (c) einer einzelnen Lamelle (L1 bzw.L2 bzw.L3) ist.

3. Drehzahlmeßvorrichtung nach Anspruch 1 und/oder 2, **dadurch gekennzeichnet**, daß die Drehzahlmeßbürste (B3) am Kommutatorumfang in kleinerem Umfangswinkel-Abstand zur einen Hauptbürste (B1) als der anderen Hauptbürste (B2) angeordnet ist.

4. Drehzahlmeßvorrichtung nach Anspruch 3, **dadurch gekennzeichnet**, daß der Drehzahlauswertevorrichtung (D) sowohl die Spannung zwischen der Drehzahlmeßbürste (B3) und der einen Hauptbürste (B1) als auch die Spannung zwischen der Drehzahlmeßbürste (B3) und der anderen Hauptbürste (B2) zuführbar ist.

5. Drehzahlmeßvorrichtung nach einem der Ansprüche 1 bis 4, **gekennzeichnet** durch zumindest einem in der Zuleitung zwischen der Drehzahlmeßbürste (B3) bzw. der Hauptbürste (B1 bzw.B2) und der Drehzahlauswertevorrichtung (D) vorgesehenen Anpassungswiderstand (R).

6. Drehzahlmeßvorrichtung für einen Kommutatormotor mit auf einer Bürstenhalterung, insbesondere einer Bürstenplatte (2 bzw.3) angeordneten Hauptbürsten (B1;B2) nach einem der Ansprüche 1 bis 5, **gekennzeichnet** durch eine Mitbenutzung der für die Hauptbürsten (B1;B2) vorgesehenen Bürstenhalterung zur Halterung der Drehzahlmeßbürste (B3).

7. Drehzahlmeßvorrichtung für einen Kommutatormotor mit auf einer Bürstenhalterung, insbesondere einer Bürstenplatte (2 bzw.3) schwenkbar gelagerten Hammer-Bürstenhaltern (21,22 bzw.31,32) für die Hauptbürsten (B1;B2) nach einem der Ansprüche 1 bis 5, **dadurch gekennzeichnet**, daß in dem Bürstenarm eines Hammer-Bürstenhalters (21 bzw.31) sowohl die jeweilige Hauptbürste (B1) als auch die Drehzahlmeßbürste (B3) gelagert ist.

8. Drehzahlmeßvorrichtung nach Anspruch 5 und/oder 6, **dadurch gekennzeichnet**, daß die Drehzahlmeßbürste (B3) in ihrer Halterung in Andruckrichtung führbar gleitgelagert und unabhängig von den Hauptbürsten (B1;B2) durch eine eigene elastische Andrückvorrichtung (Schraubenfeder 24 bzw. Bügelfeder 34) auf die Lamellen (L) des Kommutatormotors (K) gedrückt ist.

## Claims

1. Tachometer device for a commutator motor, in particular a motor-vehicle on-board motor which is permanently excited on the stator side, having a commutator (K), the bars (L) of which, distributed around its circumference and connected to the rotor-side armature winding, are brushed by at least a first and a second main brush (B1;B2) connected to an external supply-voltage source (U), characterized by at least one additional speed-measuring brush (B3), at the commutator circumference between the main brushes (B1;B2) and brushing the bars (L), and a speed-evaluating device (D) with a voltage input (D3;D1 or D3;D2) which can be attached to the speed-measuring brush (B3) and a main brush (B1 or B2).

2. Tachometer device according to claim 1, characterized in that the circumferential distance (a) between a main brush (B1 or B2) and the speed-measuring brush (B3) is greater than the circumferential distance (b) between two adjacent bars (L1;L2 or L3;L4), but is smaller than the circumferential width (c) of a single bar (L1 or L2 or L3).

3. Tachometer device according to claim 1 and/or 2, characterized in that the speed-measuring brush (B3) is arranged on the commutator circumference at a smaller circumferential-angular distance from one main brush (B1) than from the other main brush (B2).

4. Tachometer device according to claim 3, characterized in that the speed-evaluating device (D) can be supplied both with the voltage between the speed-measuring brush (B3) and the one main brush (B1) and the voltage between the speed-measuring brush (B3) and the other main brush (B2).

5. Tachometer device according to one of claims 1 to 4, characterized by at least one matching impedance (R) provided in the supply line between the speed-measuring brush (B3) or the main brush (B1 or B2) and the speed-evaluating device (D).

6. Tachometer device for a commutator motor with main brushes (B1;B2) arranged on a brush holder, in particular a brush plate (2 or 3), according to one of claims 1 to 5, characterized by a joint use of the brush holder provided for the main brushes (B1;B2) for holding the speed-measuring brush (B3).

7. Tachometer device for a commutator motor with hammer brush holders (21,22 or 31,32) for the main brushes (B1;B2), mounted in a pivotal manner on a brush holder, in particular a brush plate (2 or 3), according to one of claims 1 to 5, characterized in that in the brush arm of a hammer brush holder (21 or 31) both the respective main brush (B1) and the speed-measuring brush (B3) are mounted.

8. Tachometer device according to claim 5 and/or 6, characterized in that the speed-measuring brush (B3) is slide-mounted in its holder so that it can be guided in the direction of pressure and is pressed independently of the main brushes (B1;B2) by means of a specific elastic pressing device (helical spring 24 or fastening spring 34) on to the bars (L) of the commutator motor (K).

**Revendications**

1. Dispositif tachymétrique pour un moteur à collecteur, notamment un moteur monté à bord d'un véhicule automobile, excité selon une excitation permanente côté stator et comportant un collecteur (K), au moins des premier et second balais principaux (B1;B2) raccordés à une source extérieure de tension d'alimentation (I), glissant sur les lamelles (L) du collecteur, réparties sur la périphérie de ce dernier et raccordées à l'enroulement d'induit situé sur le rotor, caractérisé par au moins un balai supplémentaire (B3) de mesure de la vitesse de rotation, qui glisse sur les lamelles (L), sur le pourtour du collecteur entre les balais principaux (B1;B2), et par un dispositif (D) d'évaluation de la vitesse de rotation qui comporte une entrée de tension (D3;D1 ou D3;D2) pouvant être raccordée au balai (B3) de mesure de la vitesse de rotation et à un balai principal (B1 ou B2).

2. Dispositif tachymétrique suivant la revendication 1, caractérisé par le fait que la distance périphérique (a) entre un balai principal (B1 ou B2) et le balai (B3) de mesure de la vitesse de rotation est supérieure à la distance périphérique (b) entre deux lamelles voisines (L1;L2 ou L3;L4), mais inférieure à la largeur périphérique (c) d'une seule lamelle (L1 ou L2 ou L3).

3. Dispositif tachymétrique suivant la revendication 1 et/ou 2, caractérisé par le fait que le balai (B3) de mesure de la vitesse de rotation est disposé sur la périphérie du collecteur en étant séparé, par une distance angulaire périphérique plus faible, d'un balai principal (B1) que de l'autre balai principal (B2).

4. Dispositif tachymétrique suivant la revendication 3, caractérisé par le fait qu'aussi bien la tension entre le balai (B3) de mesure de la vitesse de rotation et un balai principal (B1) que la tension entre le balai (B3) de mesure de la vitesse de rotation et l'autre brosse principale (B2) peuvent être appliquées au dispositif (D) d'évaluation de la vitesse de rotation.

5. Dispositif tachymétrique suivant l'une des revendications 1 à 4, caractérisé par au moins une résistance d'adaptation (R) prévue dans le conducteur d'alimentation entre le balai (B3) de mesure de la vitesse de rotation ou le balai principal (B1 ou B2) et le dispositif (D) d'évaluation de la vitesse de rotation.

6. Dispositif tachymétrique pour un moteur à collecteur comportant des balais principaux (B1;B2) disposés sur un porte-balais, notamment une plaque porte-balais (2 ou 3, suivant l'une des revendications 1 à 5, caractérisé par l'utilisation simultanée, pour le support du balai (B3) de mesure de la vitesse de rotation, du porte-balais, prévu pour les balais principaux (B1;B2).

7. Dispositif tachymétrique pour un moteur à collecteur comportant des supports de balais en forme de marteaux (21,22 ou 31,32) montés de façon à pouvoir pivoter sur un porte-balais, notamment une plaque porte-balais (2 ou 3) et prévus pour les balais principaux (B1;B2) suivant l'une des revendications 1 à 5, caractérisé par le fait qu'aussi bien le balai principal (B1) que le balai (B3) de mesure de la vitesse de rotation sont montés sur le bras d'un support de balai en forme de marteau (21 ou 31).

8. Dispositif tachymétrique suivant la revendication 5 et/ou 6, caractérisé par le fait que le balai (B3) de mesure de la vitesse de rotation est monté coulissant dans son support de manière à être déplacé dans le sens d'un serrage, et est repoussé, indépendamment des balais principaux (B1;B2), par un dispositif de serrage élastique particulier (ressort hélicoïdal 24 ou ressort à branches 34), sur les lamelles (L) du moteur (K) à collecteur.

FIG 1

FIG 2

FIG 4

FIG 5

FIG 3